# EUROPÄISCHE PATENTSCHRIFT

(11) **EP 1 596 998 B1**
(45) Veröffentlichungstag und Bekanntmachung des Hinweises auf die Patenterteilung: **29.04.2009**
(21) Anmeldenummer: 04712034.0
(22) Anmeldetag: 18.02.2004
(51) Int. Cl.: B09C 1/08

(54) **VERFAHREN UND VORRICHTUNG ZUR ELEKTRISCHEN STEUERUNG VON PROZESSEN IN FESTSTOFFHALTIGEN MATRICES**
METHOD AND DEVICE FOR ELECTRICALLY CONTROLLING PROCESSES IN MATRICES CONTAINING SOLIDS
PROCEDE ET DISPOSITIF DE REGULATION ELECTRIQUE DE PROCESSUS SE DEROULANT DANS DES MATRICES CONTENANT DES SOLIDES

(30) Priorität: 27.02.2003 DE 10309686
(43) Veröffentlichungstag der Anmeldung: 23.11.2005
(73) Patentinhaber: Helmholtz-Zentrum für Umweltforschung GmbH - UFZ, 04318 Leipzig (DE); Ecologia Environmental Solutions Ltd, Sittingbourne Kent ME9 8BZ (GB)
(72) Erfinder: ROLAND, Ulf, 04158 Leipzig (DE); KOPINKE, Frank-Dieter, 04109 Leipzig (DE); BUCHENHORST, Daniel, 04299 Leipzig (DE); HOLZER, Frank, 04299 Leipzig (DE); KOCH, Michael, 04685 Nerchau (DE)
(74) Vertreter: Schneider, Henry
(86) Internationale Anmeldenummer: PCT/EP2004/001544
(87) Internationale Veröffentlichungsnummer: WO 2004/076084

(56) Entgegenhaltungen:
- US-A- 5 098 538
- US-A- 5 262 024
- US-A- 5 545 803
- US-A- 5 865 964
- US-A- 5 975 799
- US-A1- 2003 024 815

## Beschreibung

Die Erfindung betrifft ein Verfahren und eine Vorrichtung zur gezielten Beeinflussung von für eine Behandlung.von Feststoffen relevanten physikalischen, chemischen und biologischen Parametern mittels simultaner. Anwendung von elektrischen und/oder elektromagnetischen Feldern unterschiedlicher Frequenz mit den in den Oberbegriffen der Ansprüche 1 und 28 genannten Merkmalen.

Die Reinigung von Feststoffen, die mit umweltgefährdenden Stoffen kontaminiert sind, hat in den letzten 100 Jahren nicht nur durch die verstärkte Verbreitung, sondern auch durch die Vergrößerung des Spektrums der Schadstoffe, wie beispielsweise organische Lösungsmittel, Mineralölkohlenwasserstoffe und Herbizide, eine stark zunehmende Bedeutung erlangt. Problematisch sind dabei insbesondere Mischkontaminationen, beispielsweise aus Schwermetallen und Kohlenwasserstoffen, die in der Regel nicht mit einer einzelnen Sanierungsmethode behandelt werden können. Neben der Erhaltung der natürlichen Ressource Boden gewinnt auch die optimierte Gewinnung beziehungsweise Wiedergewinnung von Rohstoffen und Chemikalien an Bedeutung. In diesem Kontext ist die Förderung von Rohstoffen wie zum Beispiel Erdöl aus Gesteinsformationen zu sehen.

Die Wirkungen von elektrischen und elektromagnetischen Feldern auf physikalische, chemische und biologische Kenngrößen in Feststoffen, welche Relevanz für den Austrag beziehungsweise Abbau von Schad- und Wertstoffen besitzen, lassen sich in zwei Bereiche unterteilen:
Thermische Effekte sind mit einer Temperaturänderung in dem Medium durch ohmsche oder dielektrische Erwärmung verbunden. Das Resultat sind Änderungen solcher Größen wie Wasserlöslichkeit, Dampfdruck, Mobilität von chemischen Verbindungen, Lage von Adsorptions-Desorptions-Gleichgewichten sowie Phasenübergänge in bestimmten Matrices, die unter Umständen die vorgenannten Größen beeinflussen. Für biologische Prozesse relevant sind temperaturabhängige Änderungen der Bioverfügbarkeit von Schadstoffen und der Geschwindigkeiten von biologischen Prozessen, zum'Beispiel mikrobiologischen Reaktionen zum Schadstoffabbau.

Nicht-thermische Effekte resultieren aus Vorgängen, die nicht allein durch Temperaturänderungen bei der Anwendung elektrischer und elektromagnetischer Felder erklärt werden können. Ein für die Entfernung von Schwermetallen aus Feststoffen genutztes Beispiel ist die Migration geladener und, vermittelt durch Wechselwirkungen mit diesen, ungeladener Species in elektrischen Feldern. Weiterhin kann es sich um Polarisationsvorgänge in Zellen bei der Hochfrequenz-Anwendung oder Einflüsse auf den Ionentransport durch Zellmembranen handeln. So genannter "elektromagnetischer Stress" kann zu Änderungen mikrobieller Aktivitäten führen, die nicht durch (makroskopische) Temperaturänderungen erklärbar sind.

In der Sanierungspraxis haben vor allem die thermischen Effekte elektrischer Verfahren Bedeutung erlangt. Eine Reihe von Sanierungsverfahren kann durch eine Erhöhung der Bodentemperatur deutlich effektiver gestaltet beziehungsweise erst ermöglicht werden. So erhöhen sich die Dampfdrücke und Wasserlöslichkeiten von Schadstoffen, ihre Beweglichkeit nimmt aufgrund verschiedener Effekte zu und die Bioverfügbarkeit sowie die mikrobiologischen Abbauraten steigen durch moderate Erwärmung.

Insbesondere für in-situ- und on-site-Applikationen besitzen elektrische Heizmethoden einige Vorteile. So werden beispielsweise keine Hilfsmedien benötigt, die beim Durchtritt durch das kontaminierte Medium ebenfalls verunreinigt werden. Betrachtet man neben der ohmschen (Gleichspannungs- beziehungsweise Niederfrequenz-Anwendung) auch die dielektrische Erwärmung (Hochfrequenz-Anwendung), so werden im Prinzip alle Medien und Temperaturbereiche bis 400 °C und mehr zugänglich.

Es existieren nur wenige Verfahren, die für eine in-situ-Erwärmung von Böden und anderen festen Medien eingesetzt werden können.

So ist in diesem Zusammenhang das Einbringen von Heizlanzen oder ähnlichen beheizten Gebilden bekannt, wodurch eine starke Erwärmung im Nahbereich erreicht wird. Besonders bei trockenen Böden, deren Wärmeleitfähigkeit im Bereich guter Isolatoren liegt, bilden sich starke Temperaturgradienten aus, die sich selbst in relativ langen Zeiträumen nicht ausgleichen. Da das Temperaturoptimum von schadstoffabbauenden Mikroorganismen relativ schmal ausgeprägt ist, ist eine derartige Methode beispielsweise für die thermisch unterstützte mikrobiologische Bodenreinigung nicht, einsetzbar.

Der Einsatz von Heißluft oder Heißdampf zur Bodenerwärmung führt ebenfalls zur Ausbildung von Temperaturgradienten. Weiterhin wird durch die Schadstoffbelastung des Bodens das Trägermedium kontaminiert. In der Praxis ist im Fall von Heißdampf die maximal zu erreichende Temperatur auf zirka 100 °C begrenzt.

Während bei den bisher beschriebenen Verfahren der Wärmetransport über Oberflächen und Grenzflächen der Bodenpartikel erfolgen muss, bieten elektrische Heizverfahren den Vorteil einer Wärmeerzeugung im Bodenvolumen. Bei Gleich- und Wechselstromheizverfahren erfolgt der Stromfluss allerdings vorzugsweise über die Wasserphase im Zwischenkornvolumen.

Die ohmsche Erwärmung im Gleichstrombereich und Niederfrequenzbereich, in der Regel unter Anwendung von Netzstrom mit einer Frequenz von 50 beziehungsweise 60 Hz, ist an das Vorhandensein einer ausreichenden Bodenfeuchte gebunden und deshalb nur bis zum Austrocknen des Bodens bei zirka 100 °C anwendbar. Diese Variante wird in der Praxis auch als "six-phase heating" realisiert.

Dielektrischen Heizverfahren liegt dasselbe Wirkprinzip zugrunde, das auch bei Mikrowellenöfen angewandt wird. Aus den Reibungsverlusten, die bei der schnellen Umorientierung von permanenten oder induzierten Dipolen im behandelten Medium auftreten, resultiert eine Erwärmung, die durch den dielektrischen Verlustfaktor beschrieben werden kann. Diese Methode kann auch für trockene Medien angewandt werden, und im Unterschied zu Mikrowellenanwendungen ist eine Anpassung der Impedanz zur Optimierung des Energieeintrages in das jeweilige Material relativ problemlos möglich.

Es sind einzelne Sanierungsfälle bekannt, in denen zunächst eine Niederfrequenz-Erwärmung und im Anschluss daran nach Austrocknung des Bodens eine Hochfrequenz-Erwärmung erfolgte.

Zur Verringerung der Temperaturgradienten bei der Anwendung elektrischer Heizmethoden in homogenen Medien sind verschiedene Elektrodengeometrien und -schaltungen bekannt. Diese Verfahren sind unter vielen Bedingungen mit befriedigendem Erfolg einsetzbar, versagen jedoch, wenn inhomogene Verhältnisse im Sanierungsbereich vorliegen, da in diesem Fall bei ihrem Einsatz nicht zu tolerierende Temperaturgradienten auftreten. Beispiele hierfür sind das Vorhandensein von Bereichen stark unterschiedlicher Feuchte, das Vorhandensein von Tonlinsen in einem sandigen Bodenbett sowie die Koexistenz von gesättigter und ungesättigter Bodenzone.

Im Bereich der Anwendung nicht-thermischer Effekte elektrischer Felder sind elektrokinetische Bodensanierungsverfahren bekannt. Dabei wird durch das Anlegen einer Gleichspannung die Bewegung von Schadstoffen zu einer der Elektroden initiiert. In den meisten Fällen handelt es sich dabei um Schwermetallionen, die im elektrischen Feld zur Kathode wandern. Es ist jedoch auch möglich, dass neutrale Moleküle durch verschiedene Wechselwirkungen diffundieren. Das Verfahren ist bei realistischen Spannungen nur für feuchte Böden anwendbar. In der Regel ergeben sich durch die Wasserelektrolyse starke Änderungen des pH-Wertes im Elektrodenbereich, die zu Ausfällungen und Verstopfungen führen können.

Weiterhin sind nicht-thermische Einflüsse elektromagnetischer Felder auf biologische Vorgänge bekannt. Eigene Untersuchungen ergaben Hinweise darauf, dass die Wirkung von "elektromagnetischem Stress" unter bestimmten Bedingungen Degradationsprozesse beschleunigen kann.

Die allenfalls sukzessive Anwendung unterschiedlicher Frequenzen bei elektrischen Verfahren zur Reinigung von kontaminierten Feststoffen beziehungsweise zur Mobilisierung von Wertstoffen führt in der Regel zu einer Erhöhung der Temperatur des Mediums. Den bekannten Methoden ist jedoch gemein, dass eine untrennbare Korrelation der Änderung aller relevanten physikalischen, chemischen und biologischen Eigenschaften des Mediums besteht. So ist es beispielsweise nicht möglich, bei den bekannten elektrokinetischen Verfahren die Temperaturerhöhung und die Ionenbeweglichkeit getrennt zu beeinflussen, da beide Größen eindeutig mit der angelegten Spannung beziehungsweise der eingebrachten Leistung korreliert sind. Ferner wird im Fall inhomogener Materialien und feststehender Elektrodengeometrie die Feldverteilung und damit die relative Stärke des Einflusses der Feldanwendung eindeutig durch die Ortsabhängigkeit der entsprechenden physikalischen Kenngröße, beispielsweise der spezifischen ohmschen Leitfähigkeit, im Volumen bestimmt.

Aus US 5,262,024 ist ein Verfahren bekannt, bei dem zu behandelndes Erdreich mit einem elektromagnetischen Hochfrequenzwert, beispielsweise im Radiowellen- oder Mikrowellenbereich, beauftrag wird. Dieses elektromagnetische Hochfrequenzfeld kann durch ein Gleichspannungsfeld überlagert werden.

Unter Anwendung der bekannten Verfahren ist es nicht möglich, verschiedene thermische und nicht-thermische Effekte elektrischer und elektromagnetischer Felder unabhängig voneinander und optimal zu kombinieren. Darüber hinaus ist die gleichmäßige Aufheizung inhomogener Feststoffe nur unzureichend möglich beziehungsweise mit hohem Aufwand verbunden.

Aufgabe der vorliegenden Erfindung ist es daher, die Nachteile der bekannten Verfahren zu vermeiden und ein Verfahren und eine Vorrichtung zur Beeinflussung von für eine Behandlung von Feststoffen relevanten physikalischen, chemischen und biologischen Parametern unter Ausnutzung von Synergieeffekten zu schaffen, welche sich durch eine verbesserte Steuerbarkeit von für die angestrebte Behandlung optimalen physikalischen, chemischen und biologischen Parametern sowie eine verbesserte Optimierbarkeit der räumlichen Wirkung bestimmter Effekte auszeichnen.

Erfindungsgemäß wird diese Aufgabe durch ein Verfahren mit den in Anspruch 1 genannten Merkmalen und eine Vorrichtung mit den in Anspruch 28 genannten Merkmalen gelöst. Das Verfahren zur gezielten Beeinflussung von für eine Behandlung von Feststoffen relevanten physikalischen und/oder chemischen und/oder biologischen Parametern wie beispielsweise Temperatur, elektrische Leitfähigkeit, dielektrischer Verlustfaktor, mikrobiologische Aktivität oder Beweglichkeit zeichnet sich dadurch aus, dass gleichzeitig in einen zu behandelnden Feststoff mindestens ein elektromagnetisches Hochfrequenzfeld, insbesondere im Radiowellen- und/oder Mikrowellenbereich, und mindestens ein elektrisches Feld mit einer Frequenz zwischen >0 und 60 Hz eingebracht wird.. Hierdurch werden die verfahrenstechnischen Vorteile eines erhöhten Leistungseintrags und die Verringerung von thermischen Verlusten sowie eine Verkürzung der Sanierungs- beziehungsweise Prozessdauer erreicht. Darüber hinaus werden jedoch überraschenderweise synergetische Effekte erzielt,

### [weiter auf Seite 9 der ursprünglichen Beschreibung]

die zu einer deutlichen Verbesserung der Steuerbarkeit von für die angestrebte Behandlung optimalen physikalischen, chemischen und biologischen Parametern sowie eine verbesserte Optimierbarkeit der räumlichen Wirkung bestimmter Effekte führen. Im Falle der am häufigsten angewandten thermischen Methoden lässt sich somit beispielsweise ein Gleichspannungsfeld als Triebkraft für Ionenmigration unabhängig von einem elektromagnetischen Wechselfeld für die Matrixerwärmung einstellen. Weiterhin können durch geeignete Wahl der Frequenzen und der Elektrodengeometrie insbesondere Bereiche mit stark unterschiedlicher Feuchte homogen erwärmt beziehungsweise behandelt werden. Dies hat in Sanierungsanwendungen unter anderem zur Konsequenz, dass die unerwünschte Readsorption oder Rekondensation von Schadstoffen in kälteren Bereichen, wie sie beispielsweise bei sukzessivem Einsatz von verschiedenen Heizmethoden auftreten, vermieden wird.

Im Rahmen des erfindungsgemäßen Verfahrens ist bevorzugt vorgesehen, dass der zu behandelnde Feststoff eine Bodenformation ist. Auf diese Weise ergeben sich vielfältige Anwendungsmöglichkeiten des Verfahrens, wie beispielsweise eine Dekontamination, welche sich vorteilhaft durch besonders günstige Eigenschaften auszeichnen.

Daneben ist im Rahmen des erfindungsgemäßen Verfahrens bevorzugt vorgesehen, dass der zu behandelnde Feststoff ein Katalysator beziehungsweise ein katalytisch aktives Material ist. Durch die erfindungsgemäßen Mittel wird eine gleichmäßige Regenerierung durch beispielsweise Thermodesorption realisiert.

Ferner ist im Rahmen des erfindungsgemäßen Verfahrens vorgesehen, dass der zu behandelnden Feststoff ein Adsorbens beziehungsweise ein sorptionsaktives Material ist. Das erfindungsgemäße Verfahren bietet vorteilhaft vielfältige Anwendungsmöglichkeiten. So sind beispielsweise eine Reinigung des Adsorbens und/oder eine Minimierung der Restbeladung des Adsorberbettes möglich.

Weiterhin ist im Rahmen des erfindungsgemäßen Verfahrens bevorzugt vorgesehen, dass das Verfahren eine gezielte Erwärmung des zu behandelnden Feststoffes beinhaltet. Hierdurch lassen sich insbesondere physikalische, chemische und/oder biologische Prozesse vorteilhaft beeinflussen beziehungsweise beschleunigen.

Auch ist bevorzugt im Rahmen des erfindungsgemäßen Verfahrens vorgesehen, dass der zu behandelnde Feststoff mit wenigstens einem Schadstoff belastet ist und der zu behandelnde Feststoff mit dem Ziel einer optimierten Dekontamination behandelt wird. Durch die erfindungsgemäßen Mittel wird vorteilhaft eine gleichmäßige Dekontamination über das gesamte zu behandelnde Feststoffvolumen erzielt.

Des Weiteren ist im Rahmen des erfindungsgemäßen Verfahrens bevorzugt vorgesehen, dass wenigstens ein an dem zu behandelnden Feststoff adsorbierter Stoff durch die Erwärmung aus dem zu behandelnden Feststoff freigesetzt wird. Durch die erfindungsgemäßen Mittel wird vorteilhaft eine gleichmäßige Freisetzung des adsorbierten Stoffes über das gesamte zu behandelnde Feststoffvolumen erzielt.

Bevorzugt ist im Rahmen des erfindungsgemäßen Verfahrens ferner vorgesehen, dass zumindest zwei der angewandten Felder unterschiedlicher Frequenz über dasselbe Elektrodensystem in den zu behandelnden Feststoff eingebracht werden. Hierdurch werden vorteilhaft besonderes günstige Eigenschaften der Feldausbreitung in dem zu behandelnden Feststoff erzielt. Weiterhin ist bevorzugt vorgesehen, dass wenigstens eine externe Struktur als Elektrode genutzt wird, wobei die wenigstens eine externe Struktur vorzugsweise eine Flüssigkeit und/oder Wasser und/oder Grundwasser sein kann. Dies ist mit Zeit- und Kostenvorteilen verbunden und eröffnet weiterhin günstige Möglichkeiten zur Optimierung der Feldverläufe.

Darüber hinaus ist im Rahmen des erfindungsgemäßen Verfahrens bevorzugt vorgesehen, dass die technischen Parameter so gewählt werden, dass eine im Wesentlichen homogene Erwärmung zumindest eines Teils des Volumens des zu behandelnden Feststoffes erreicht wird. Auf diese Weise werden für die Behandlung des Feststoffes nachteilige, aufgrund von Temperaturgradienten entstehende Effekte vermieden.

Im Rahmen des erfindungsgemäßen Verfahrens ist außerdem bevorzugt vorgesehen, dass wenigstens eine gesättigte und wenigstens eine ungesättigte Bodenzone mit im Wesentlichen gleichen Aufheizraten erwärmt werden. Hierdurch wird vorteilhaft die Entstehung von Temperaturgradienten zwischen gesättigten und ungesättigten Bodenzonen minimiert.

Ferner ist im Rahmen des erfindungsgemäßen Verfahren bevorzugt vorgesehen, dass wenigstens zwei Teilvolumina des zu behandelnden Feststoffes mit voneinander abweichender Beschaffenheit mit im Wesentlichen gleichen Aufheizraten erwärmt werden. Auf diese Weise wird vorteilhaft die Entstehung von Temperaturgradienten zwischen den wenigstens zwei Teilvolumina minimiert.

Des Weiteren ist im Rahmen des erfindungsgemäßen Verfahrens bevorzugt vorgesehen, dass der zu behandelnde Feststoff erwärmt wird, um darin enthaltene Kohlenwasserstoffe zu gewinnen. Durch die erfindungsgemäßen Mittel ist eine einfach anwendbare Behandlungsmöglichkeit des Feststoffes mit einer gleichmäßigen Freisetzung der Kohlenwasserstoffe gegeben.

Im Rahmen des erfindungsgemäßen Verfahrens ist zudem bevorzugt vorgesehen, dass in dem zu behandelnden Feststoff Mikroorganismen abgetötet werden und/oder eine Hygienisierung erfolgt. Durch die erfindungsgemäßen Mittel wird eine gleichmäßige Entkeimung des Feststoffes über das gesamte zu behandelnde Feststoffvolumen erzielt.

Weiterhin ist im Rahmen des erfindungsgemäßen Verfahrens bevorzugt vorgesehen, dass durch die Erwärmung chemische Reaktionen in dem zu behandelnden Feststoff initiiert werden, die zur Entfernung und/oder Umwandlung zumindest eines Teiles wenigstens eines in dem zu behandelnden Feststoff enthaltenen Schadstoffes führen. Hierdurch ist eine einfach handhabbare Möglichkeit einer Dekontamination des Feststoffes gegeben.

Im Rahmen des erfindungsgemäßen Verfahrens ist überdies bevorzugt vorgesehen, dass wenigstens ein elektrokinetisches Dekontaminationsverfahren zumindest teilweise thermisch unterstützt wird und/oder vorzugsweise wenigstens ein mikrobielles Dekontaminationsverfahren zumindest teilweise thermisch unterstützt wird und/oder insbesondere bevorzugt wenigstens eine Bodenluftabsaugung zumindest teilweise thermisch unterstützt wird. Hierdurch ist in einfacher Weise die Proessgeschwindigkeit für das jeweilige Dekontaminationsverfahren erhöhbar.

Auch ist im Rahmen des erfindungsgemäßen Verfahrens bevorzugt vorgesehen, dass der wenigstens eine Schadstoff durch thermisch initiierte Reaktionen mit der Bodenmatrix immobilisiert wird. Auf diese Weise ist eine einfach anzuwendende Möglichkeit der Schadstoffimmobilisierung gegeben.

Fernerhin ist im Rahmen des erfindungsgemäßen Verfahrens bevorzugt vorgesehen, dass wenigstens ein Teilvolumen des Feststoffs, welches als Barriere für den wenigstens einen Schadstoff wirkt, selektiv erwärmt wird. Hierdurch wird vorteilhaft eine gezielte Regenerierung der wenigstens einen Barriere ermöglicht.

Darüber hinaus ist im Rahmen des erfindungsgemäßen Verfahrens bevorzugt vorgesehen, dass die Grundfrequenz des ersten Feldes im Wesentlichen 0 Hz und die Grundfrequenz des wenigstens einen weiteren Feldes im Wesentlichen hochfrequent ist und weiterhin insbesondere bevorzugt, dass die Grundfrequenz des ersten Feldes im Wesentlichen niederfrequent und die Grundfrequenz des wenigstens einen weiteren Feldes im Wesentlichen hochfrequent ist, wobei die niederfrequente Grundfrequenz eine ortsübliche Netzfrequenz von 50 oder 60 Hz aufweist. Ferner ist bevorzugt vorgesehen, dass die hochfrequente Grundfrequenz im Wesentlichen im Mikrowellenbereich und weiterhin bevorzugt im Wesentlichen im Radiowellenbereich liegt. Durch die erfindungsgemäßen Mittel sind vielfältige Möglichkeiten der gezielten Beeinflussung von für die Behandlung des Feststoffes relevanten Parametern gegeben, welche sich vorteilhaft durch eine entkoppelte Steuerbarkeit sowie eine verbesserte Optimierbarkeit als bisher bekannt auszeichnen.

Schließlich ist im Rahmen des erfindungsgemäßen Verfahrens bevorzugt vorgesehen, dass durch die Wahl der hochfrequenten Grundfrequenz der Potentialverlauf entlang wenigstens einer Elektrode optimiert wird. Auf diese Weise ist eine gewünschte Abstrahlcharakteristik und ein damit verbundener optimierter Leistungseintrag einstellbar.

Die erfindungsgemäße Vorrichtung zur gezielten Beeinflussung von für eine Behandlung von Feststoffen relevanten physikalischen und/oder chemischen und/oder biologischen Parametern mit wenigstens zwei elektrischen Spannungsquellen, wenigstens einer Elektrode und wenigstens einer Koppeleinrichtung zeichnet sich dadurch aus, dass mittels der wenigstens zwei elektrischen Spannungsquellen wenigstens zwei Spannungen mit voneinander abweichenden Grundfrequenzen erzeugbar sind und die wenigstens zwei Spannungen mittels der wenigstens einen Koppeleinrichtung auf die wenigstens eine Elektrode übertragbar sind, wobei mindestens ein elektromagnetisches Hochfrequenzfeld, insbesondere im Radiowellen- und/oder Mikrowellenbereich und mindestens ein elektrisches Feld mit einer Frequenz zwischen >0 und 60 Hz in dem zu behandelnden Feststoff einbringbar sind. Durch die erfindungsgemäßen Mittel sind die verfahrenstechnischen Vorteile eines erhöhten Leistungseintrags und die Verringerung von thermischen Verlusten sowie eine Verkürzung der Sanierungs- beziehungsweise Prozessdauer erreichbar. Darüber hinaus werden synergetische Effekte erzielt, die zu einer deutlichen Verbesserung der Steuerbarkeit von für die angestrebte Behandlung optimalen physikalischen, chemischen und biologischen Parametern sowie einer verbesserten Optimierbarkeit der räumlichen Wirkung bestimmter Effekte führen. Im Falle der am häufigsten angewandten thermischen Methoden lässt sich somit beispielsweise ein Gleichspannungsfeld als Triebkraft für Ionenmigration unabhängig von einem elektromagnetischen Wechselfeld für die Matrixerwärmung einstellen. Weiterhin können durch geeignete Wahl der Frequenzen und der Elektrodengeometrie insbesondere Bereiche mit stark unter

### [Fortsetzung auf Seite 16 der ursprünglichen Beschreibung]

schiedlicher Feuchte homogen erwärmt beziehungsweise behandelt werden. Dies hat in Sanierungsanwendungen unter anderem zur Konsequenz, dass die unerwünschte Readsorption oder Rekondensation von Schadstoffen in kälteren Bereichen, wie sie beispielsweise bei sukzessivem Einsatz von verschiedenen Heizmethoden auftreten, vermieden wird. Vorzugsweise wird die Mehrfrequenzanwendung dabei über ein und dasselbe im Sanierungsbereich installierte Elektrodensystem realisiert, indem gleichzeitig Potentiale unterschiedlicher Frequenz und Amplitude aufgebaut werden. Eine technische Voraussetzung dafür ist, dass die Koppeleinrichtung primärseitig wenigstens ein Mittel zur Entkopplung der wenigstens zwei Spannungsquellen umfasst. Für eine Niederfrequenz-Entkopplung ist dies vorzugsweise mittels wenigstens eines elektronischen Anpassnetzwerkes und den darin enthaltenen Kondensatoren gegeben. Eine Hochfrequenz-Entkopplung ist vorzugsweise mittels wenigstens eines λ/4-Kabels und insbesondere bevorzugt wenigstens eines elektronischen Filters realisierbar, wobei das wenigstens eine Filter vorzugsweise ein Tiefpass ist.

In einer weiteren bevorzugten Ausgestaltung der Erfindung ist vorgesehen, dass zur Erzeugung von Spannungen der gewünschten Frequenzen wenigstens eine der wenigstens zwei Spannungsquellen ein Hochfrequenzgenerator, Wechselstromtransformator oder eine Gleichspannungsquelle ist.

In bevorzugter Ausgestaltung der Erfindung ist vorgesehen, dass die Vorrichtung wenigstens eine Temperaturmesseinrichtung umfasst. Hierdurch ist eine einfach realisierbare Rückkopplungsmöglichkeit zur Prozesskontrolle und/oder -regelung gegeben. Besonders bevorzugt ist weiter vorgesehen, dass die wenigstens eine Messeinrichtung wenigstens einen optischen Sensor, faseroptischen Sensor oder dergleichen umfasst. Auf diese Weise ist eine störungsfreie Erfassung von Messgrößen möglich.

Überdies ist in einer bevorzugten Ausgestaltung der Erfindung vorgesehen, dass die Vorrichtung wenigstens eine Schadstoffaufbereitungseinrichtung umfasst. Hierdurch ist vorteilhaft die Möglichkeit einer. Verwertung oder Entsorgung von aus dem behandelten Feststoff gewonnenen Schadstoffen gegeben.

Schließlich ist in bevorzugter Ausgestaltung der Erfindung vorgesehen, dass wenigstens eine externe Struktur als Elektrode nutzbar ist. Dabei kann die wenigstens eine externe Struktur insbesondere bevorzugt eine Flüssigkeit und/oder Wasser und/oder Grundwasser sein. Dies ist mit Zeit- und Kostenvorteilen verbunden und birgt weiterhin günstige Möglichkeiten der Optimierung der Feldverläufe.

Weitere bevorzugte Ausgestaltungen der Erfindung ergeben sich aus den übrigen, in den Unteransprüchen genannten Merkmalen.

Die Erfindung wird nachfolgend in Ausführungsbeispielen anhand der zugehörigen Zeichnungen näher erläutert. Es zeigen:
- Figur 1: mikrobielle Abbauraten von Phenol bei Erwärmung im Wasserbad und beim Einbringen eines hochfrequenten elektromagnetischen Feldes bei gleicher Temperatur im Vergleich;
- Figur 2: einen Aufbau einer Vorrichtung zur simultanen Erzeugung und Kopplung wenigstens zweier Spannungen unterschiedlicher Frequenzen mit peripheren Einrichtungen zur Feststoffdekontamination;
- Figur 3: eine Vorrichtung zur homogenen dielektrischen Erwärmung von stark unterschiedlichen Bodenzonen;
- Figur 4: Aufheizraten einer gesättigten und einer ungesättigten Bodenzone mit einer Vorrichtung nach Figur 3 zur homogenen dielektrischen Erwärmung und
- Figur 5: eine optimierte Vorrichtung zur elektrokinetischen Bodenreinigung.

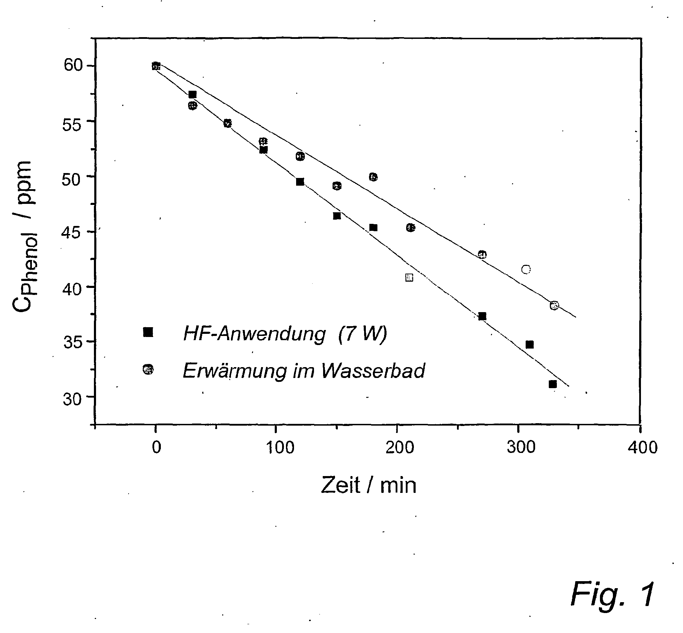

Figur 1 zeigt mikrobielle Abbauraten von Phenol durch den Stamm Pseudomonas fluorescens SV35 bei Erwärmung im Wasserbad und bei simultanem Einbringen eines hochfrequenten elektromagnetischen Feldes, wobei in allen Fällen die Temperatur konstant gehalten wurde. Untersuchungen zum mikrobiellen Abbau von Phenol durch den Stamm Pseudomonas fluorescens SV35 ergaben die für mesophile Mikroorganismen zu erwartende Temperaturabhängigkeit dar Abbaurate mit einem Maximum bei ca. 35 °C. Die Temperatur konnte in dieser Versuchsreihe durch nicht-elektrische, niederfrequente und hochfrequente elektrische Heizmethoden und deren Kombination eingestellt werden. Während die meisten direkt mit der Temperatur korrelierten relevanten Parameter (Wasserlöslichkeit, Diffusionsgeschwindigkeit u. a.) von der Erwärmungsmethode unbeeinflusst sind, zeigten Vergleichsmessungen zwischen Wasserbadund HF-Erwärmung bei 30 °C zusätzliche nicht-thermische Effekte, die im Falle der HF-Erwärmung zu signifikant höheren Abbauraten führten. Das Ergebnis wurde sowohl durch colorimetrische als auch durch HPLC-Analyse des Phenolgehalts in der wässrigen Lösung erhalten. Obwohl die mikrobiologischen Ursachen derartiger Effekte nicht völlig geklärt sind, belegt dieses überraschende Resultat die Möglichkeit, durch entkoppelte Einstellung der Parameter Temperatur und HF-Feldstärke positive Effekte für mikrobiologische Schadstoffabbauprozesse zu erzielen.

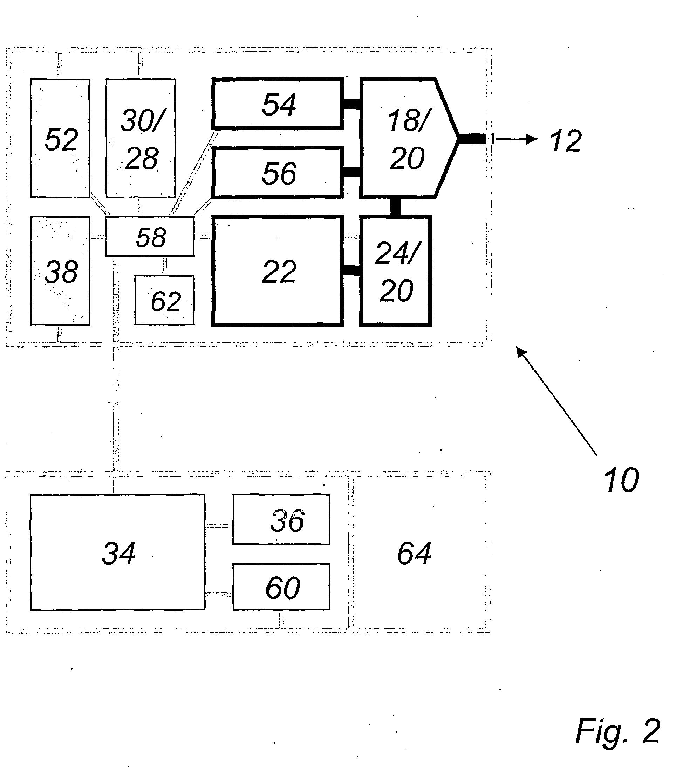

Figur 2 zeigt den schematischen Aufbau einer Ausführung einer erfindungsgemäßen Vorrichtung 10 zur simultanen Erzeugung und Kopplung wenigstens zweier Spannungen unterschiedlicher Frequenzen für eine simultane Behandlung von Feststoffen mit elektrischen beziehungsweise elektromagnetischen Feldern unterschiedlicher Frequenzen. Die Vorrichtung 10 umfasst mehrere Spannungsquellen wie eine Gleichspannungsquelle 54, eine Niederfrequenzspannungsquelle 56 und einen Hochfrequenzgenerator 22 mit Anpassnetzwerk 24 zur Erzeugung von Spannungen unterschiedlicher Grundfrequenz. Mittels einer Koppeleinrichtung 18 werden die Spannungen auf ein gemeinsames Elektrodensystem wie beispielsweise Plattenelektroden, einzelne Stabelektroden oder ein Array von Stabelektroden übertragen, wobei eine Frequenzentkopplung durch Filter, Kondensatoren oder dergleichen stattfindet. Eine Messeinrichtung 28 wie insbesondere eine optische Temperaturmesseinrichtung 30 dient zur Kontrolle beziehungsweise Rückkopplung von Mess-, Zustands- oder Regelgrößen. Eine Analyseeinrichtung 52 dient der Analyse von Schadstoffen, Wertstoffen oder dergleichen. Mittels einer Schadstoffaufbereitungseinrichtung 38 erfolgt eine Reinigung der Abluft beziehungweise der freigesetzten Substanzen. Eine Kühleinrichtung 62 dient zur Kühlung der Vorrichtung 10 und insbesondere des Hochfrequenzgenerators 22. Die genannten aktiven Komponenten können mit einer lokalen Datenerfassungseinrichtung 58 zur Steuerung der Komponenten beziehungsweise Erfassung von Messdaten verbunden sein. Mittels einer Steuereinrichtung 34 erfolgt eine Steuerung der Vorrichtung 10 beziehungsweise des Verfahrensablaufes, eine Erfassung beziehungsweise Verarbeitung und eine Visualisierung von Mess-, System- und Prozessdaten. Eine Datenfernübertragungseinrichtung 36 ermöglicht eine Übertragung dieser Daten über Funk oder leitungsgebundene Kommunikationssysteme. Über eine Netzwerkverbindung 60 ist eine Fernbedienung der Vorrichtung 10 beziehungsweise ein Remote-Login möglich. Ein Büroteil 64 schließlich ermöglicht eine Auswertung vor Ort, einen Aufenthalt von Bedienpersonal und dergleichen. Abhängig vom konkreten Anwendungsfall können Komponenten entfallen oder weitere hinzukommen.

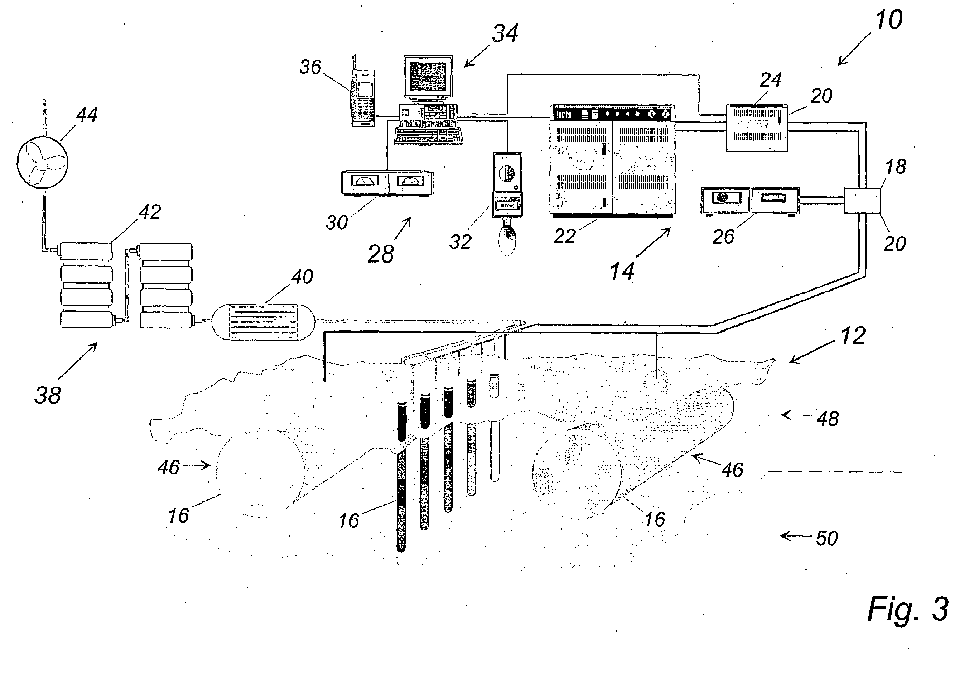

Figur 3 zeigt schematisch eine Ausführung der erfindungsgemäßen Vorrichtung 10 für die simultane Behandlung einer Bodenzone 48 beziehungsweise 50 mit einem niederfrequenten und einem hochfrequenten elektromagnetischen Feld. Die Felder werden hierbei über dasselbe Elektrodensystem angewandt. Ziel der Anwendung ist die Entfernung einer hohen Kohlenwasserstoffkontamination im Bereich eines ehemaligen Lösungsmitteltanklagers durch thermisch unterstützte Bodenluftabsaugung. Im Sanierungsbereich ist ein hoher Grundwasserstand zu konstatieren, so dass eine Koexistenz von gesättigter Bodenzone 50 und ungesättigter kontaminierter Bodenzone 48 gegeben ist. Der Übergang befindet sich in 1,80 m Tiefe. Der zu behandelnde Bereich besitzt insgesamt eine Mächtigkeit von 3,20 m. Bei der Sanierungsmaßnahme im Bereich zwischen zwei Tanks werden externe Strukturen 46 als Elektroden 16 verwendet. Hierzu werden die zwei Tanks genutzt und parallel geschaltet. Eine Reihe von Absaugbrunnen in der Mitte zwischen den Tanks dient als Gegenelektrode 16. Als Spannungsquellen 14 kommen ein Wechselstromtransformator 26 zur Erzeugung einer Wechselspannung von 50 Hz und ein Hochfrequenzgenerator 22 zur Erzeugung einer Wechselspannung von 13,56 MHz zum Einsatz. Die Kopplung beziehungsweise Entkopplung beider Spannungen erfolgt mittels einer Koppeleinrichtung 18, welche als Mittel zur Entkopplung 20 ein elektronisches Anpassnetzwerk 24 zur Niederfrequenzentkopplung sowie ein λ/4-Kabel mit Tiefpass und ein Netzfilter zur Hochfrequenzentkopplung umfasst. Eine Messeinrichtung 28 umfasst eine Temperaturmesseinrichtung 30 zur kontinuierlichen Temperaturerfassung, eine Mehrzahl faseroptischer Sensoren zur Messwerterfassung an achtundvierzig Messstellen in verschiedenen Ebenen im Bodenbett. Zur Überwachung der elektrischen Feldstärke ist eine Feldmesseinrichtung 32 vorhanden. Zur Steuerung der Vorrichtung 10 dient eine Steuereinrichtung 34 mit Datenfernübertragungseinrichtung 36. Die freigesetzten Schadstoffe werden in eine Schadstoffaufbereitungseinrichtung 38 mittels einer Absaugeinrichtung 44 gefördert und insbesondere über einen Wärmetauscher 40 zu einem Aktivkohlefilter 42 geführt. Die erfindungsgemäße Vorrichtung 10 ermöglicht eine im Wesentlichen homogene Erwärmung des zu behandelnden inhomogenen Mediums. Auf diese Weise werden eine unerwünschte Readsorption und Rekondensation der Schadstoffe weitestgehend vermieden.

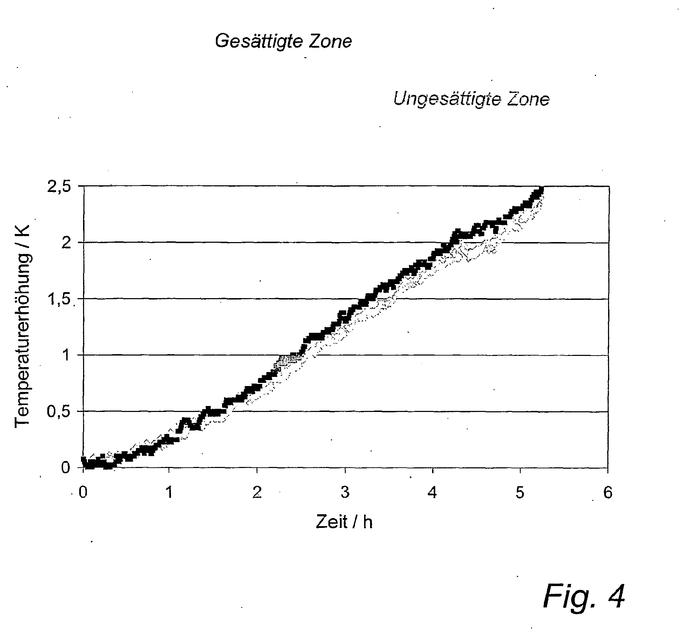

Figur 4 zeigt die Aufheizraten in einer gesättigten und einer ungesättigten Bodenzone bei Anwendung einer erfindungsgemäßen Vorrichtung zur elektrischen Erwärmung von Bodenzonen mittels simultanen Einbringens zweier elektrischer und/oder elektromagnetischer Felder unterschiedlicher Frequenzen. Das Verhältnis der Leistungen zweier parallel geschalteter Spannungsquellen mit den Frequenzen 50 Hz (NF) und 13,56 MHz (HF) wurde auf Basis von Vorversuchen ermittelt und auf 1 kW zu 0,9 kW eingestellt. Wie exemplarisch anhand der Mittelwerte aller Temperatursensoren der beiden Ebenen in der gesättigten beziehungsweise der ungesättigten Zone deutlich wird, kann mittels des simultanen Einbringens elektrischer und/oder elektromagnetischer Felder unterschiedlicher Frequenzen eine weitgehend gleichmäßige Erwärmung im gesamten Bodenvolumen erreicht werden.

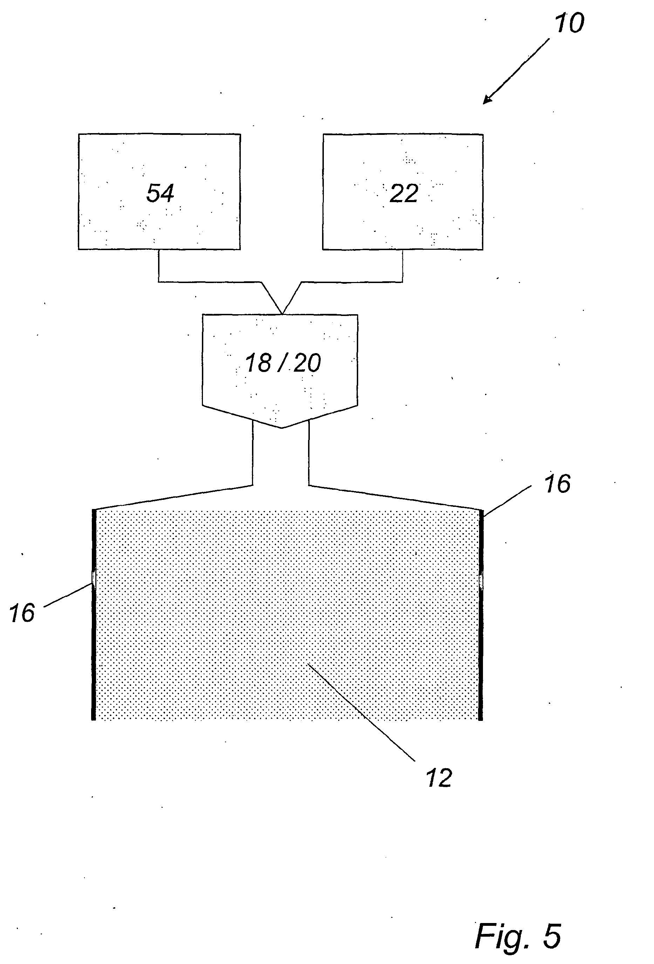

Figur 5 zeigt eine erfindungsgemäße Vorrichtung 10 zur Bodenreinigung mit einer Gleichspannungsquelle 54, einem Hochfrequenzgenerator 22, einer Koppeleinrichtung 18 und einer Elektrode 16. Der kontrollierte Transport von Ionen in einem Feststoff 12, zum Beispiel einem Boden, kann genutzt werden, um ionische Schadstoffe (zum Beispiel Schwermetalle) zu entfernen oder die Nährstoffzufuhr zu verbessern und damit mikrobielle Abbauvorgänge zu unterstützen. Bei diesen' elektrokinetischen Verfahren konkurriert die gerichtete Bewegung der geladenen Species in einem zeitlich konstanten äußeren elektrischen Feld (Anwendung einer Gleichspannung) mit der ungerichteten Normaldiffusion. Beide Prozesse sind temperaturabhängig. Ihre Geschwindigkeit steigt exponentiell mit der Temperatur an. In der Regel führt das Gleichspannungsfeld nicht zu einer signifikanten Temperaturerhöhung im Boden, da physikalische und verfahrenstechnische Limitierungen (maximal mögliche Spannungen, unerwünschte Wasserelektrolyse, damit verbundene pH-Wert-Änderungen im Elektrodenbereich, begrenzte Leitfähigkeit des Bodens) den spezifischen Leistungseintrag begrenzen. Die erfindungsgemäße Vorrichtung ermöglicht die kontrollierte Einstellung einer optimalen Temperatur im zu reinigenden Bodenvolumen unabhängig vom Gleichspannungsfeld und damit eine drastische Verkürzung der Behandlungszeit.

In einem Laborexperiment wurde ein tonig-schluffiges Flusssediment, das neben anderen Schwermetallen mit Zink belastet war, einem Gleichspannungsfeld ausgesetzt. Für eine Absenkung der Restkonzentration um den Faktor 10 wurde bei °C eine Behandlungszeit von rund 12 d benötigt. In einem weiteren Experiment wurde mittels der erfindungsgemäßen Vorrichtung 10 simultan zum Gleichspannungsfeld ein HF-Feld angelegt. Nach wenigen Stunden wurde eine mittlere Temperatur von 45 °C im Sedimentbett erreicht und konstant eingeregelt. Gleichspannungs- und HF-Feld wurden über dieselbe Elektrode 16 (planares Netz aus Edelstahl) in das Sedimentbett eingespeist. Die Behandlungszeit, die zur Absenkung der Zinkkonzentration im Sediment um den Faktor 10 notwendig war, betrug nur noch 2,5 d.

### Bezugszeichenliste

- 10: Vorrichtung
- 12: Feststoff
- 14: Spannungsquellen
- 16: Elektroden
- 18: Koppeleinrichtung
- 20: Mittel zur Entkopplung
- 22: Hochfrequenzgenerator
- 24: Anpassnetzwerk
- 26: Wechselstromtransformator
- 28: Messeinrichtung
- 30: Temperaturmesseinrichtung
- 32: Feldmesseinrichtung
- 34: Steuereinrichtung
- 36: Datenfernübertragungseinrichtung
- 38: Schadstoffaufbereitungseinrichtung
- 40: Wärmetauscher
- 42: Aktivkohlefilter
- 44: Absaugeinrichtung
- 46: externe Struktur
- 48: ungesättigte Bodenzone
- 50: gesättigte Bodenzone
- 52: Analyseeinrichtung
- 54: Gleichspannungsquelle
- 56: Niederfrequenzspannungsquelle
- 58: lokale Datenerfassungseinrichtung
- 60: Netzwerkverbindung
- 62: Kühleinrichtung
- 64: Büroteil

## Patentansprüche

1. Verfahren zur gezielten Beeinflussung von für eine Behandlung von Feststoffen relevanten physikalischen und/oder chemischen und/oder biologischen Parametern, **dadurch gekennzeichnet, dass** gleichzeitig in einen zu behandelnden Feststoff mindestens ein elektromagnetisches Hochfrequenzfeld, insbesondere im Radiowellen- und/oder Mikrowellenbereich, und mindestens ein elektrisches Feld mit einer Frequenz zwischen >0 und 60 Hz eingebracht wird.

2. Verfahren nach Anspruch 1, **dadurch gekennzeichnet, dass** der zu behandelnde Reststoff eine Bodenformation ist.

3. Verfahren nach Anspruch 1, **dadurch gekennzeichnet, dass** der zu behandelnde Feststoff ein Katalysator beziehungsweise ein katalytisch aktives Material ist.

4. Verfahren nach Anspruch 1, **dadurch gekennzeichnet, dass** der zu behandelnde Feststoff ein Adsorbens beziehungsweise ein sorptionsaktives Material ist.

5. Verfahren nach einem der Ansprüche 1 bis 4, **dadurch gekennzeichnet, dass** das Verfahren eine gezielte Erwärmung des zu behandelnden Feststoffes beinhaltet.

6. Verfahren nach einem der Ansprüche 1 bis 5, **dadurch gekennzeichnet, dass** der zu behandelnde Feststoff mit wenigstens einem Schadstoff belastet ist und der zu behandelnde Feststoff mit dem Ziel einer optimierten Dekontamination behandelt wird.

7. Verfahren nach einem der Ansprüche 1 bis 6, **dadurch gekennzeichnet, dass** wenigstens ein an dem zu behandelnden Feststoff adsorbierter Stoff durch die Erwärmung aus dem zu behandelnden Feststoff freigesetzt wird.

8. Verfahren nach einem der Ansprüche 1 bis 7, **dadurch gekennzeichnet, dass** zumindest zwei der angewandten Felder unterschiedlicher Frequenz über dasselbe Elektrodensystem in den zu behandelnden Feststoff eingebracht werden.

9. Verfahren nach einem der Ansprüche 5 bis 8, **dadurch gekennzeichnet, dass** die technischen Parameter so gewählt werden, dass eine im Wesentlichen homogene Erwärmung zumindest eines Teils des Volumens des zu behandelnden Feststoffes erreicht wird.

10. Verfahren nach einem der Ansprüche 5 bis 9, **dadurch gekennzeichnet, dass** wenigstens eine gesättigte und wenigstens eine ungesättigte Bodenzone mit im Wesentlichen gleichen Aufheizraten erwärmt werden.

11. Verfahren nach einem der Ansprüche 5 bis 10, **dadurch gekennzeichnet, dass** wenigstens zwei Teilvolumina des zu behandelnden Feststoffes mit voneinander abweichender Beschaffenheit mit im Wesentlichen bleichen Aufheizraten erwärmt werden.

12. Verfahren nach einem der Ansprüche 5 bis 11, **dadurch gekennzeichnet, dass** der zu behandelnde Feststoff erwärmt wird, um darin enthaltene Kohlenwasserstoffe zu gewinnen.

13. Verfahren nach einem der Ansprüche 1 bis 12, **dadurch gekennzeichnet, dass** in dem zu behandelnden Feststoff Mikroorganismen abgetötet werden und/oder eine Hygienisierung erfolgt.

14. Verfahren nach einem der Ansprüche 5 bis 13, **dadurch gekennzeichnet, dass** durch die Erwärmung chemische Reaktionen in dem zu behandelnden Feststoff initiiert werden, die zur Entfernung und/oder Umwandlung zumindest eines Teiles wenigstens eines in dem zu behandelnden Feststoff enthaltenen Schadstoffes führen.

15. Verfahren nach einem der Ansprüche 5 bis 14, **dadurch gekennzeichnet, dass** wenigstens ein elektrokinetisches Dekontaminationsverfahren zumindest teilweise thermisch unterstützt wird.

16. Verfahren nach einem der Ansprüche 5 bis 15, **dadurch gekennzeichnet, dass** wenigstens ein mikrobielles Dekontaminationsverfahren zumindest teilweise thermisch unterstützt wird.

17. Verfahren nach einem der Ansprüche 5 bis 16, **dadurch gekennzeichnet, dass** wenigstens eine Bodenluftabsaugung zumindest teilweise thermisch unterstützt wird.

18. Verfahren nach einem der Ansprüche 5 bis 17, **dadurch gekennzeichnet, dass** der wenigstens eine Schadstoff durch thermisch initiierte Reaktionen mit der Bodenmatrix immobilisiert wird.

19. Verfahren nach einem der Ansprüche 5 bis 18, **dadurch gekennzeichnet, dass** wenigstens ein Teilvolumen des Feststoffes, welches als Barriere für den wenigstens einen Schadstoff wirkt, selektiv erwärmt wird.

20. Verfahren nach einem der Ansprüche 1 bis 19, **dadurch gekennzeichnet, dass** die Grundfrequenz des ersten Feldes im Wesentlichen 0 Hz und die Grundfrequenz des wenigstens einen weiteren Feldes im Wesentlichen hochfrequent ist.

21. Verfahren nach einem der Ansprüche 1 bis 19, **dadurch gekennzeichnet, dass** die Grundfrequenz des ersten Feldes im Wesentlichen niederfrequent und die Grundfrequenz des wenigstens einen weiteren Feldes im Wesentlichen hochfrequent ist.

22. Verfahren nach Anspruch 21, **dadurch gekennzeichnet, dass** die niederfrequente Grundfrequenz eine ortsübliche Netzfrequenz von 50 oder 60 Hz aufweist.

23. Verfahren nach einem der Ansprüche 20 bis 22, **dadurch gekennzeichnet, dass** die hochfrequente Grundfrequenz im Wesentlichen im Mikrowellenbereich liegt.

24. Verfahren nach einem der Ansprüche 20 bis 22, **dadurch gekennzeichnet, dass** die hochfrequente Grundfrequenz im Wesentlichen im Radiowellenbereich liegt.

25. Verfahren nach einem der Ansprüche 20 bis 24, **dadurch gekennzeichnet, dass** durch die Wahl der Frequenz der hochfrequenten Grundfrequenz der Potentialverlauf entlang wenigstens einer Elektrode optimiert wird.

26. Verfahren nach einem der Ansprüche 1 bis 25, **dadurch** gekenntzeichnet, dass wenigstens eine externe Struktur als Elektrode genutzt wird.

27. Verfahren nach Anspruch 26, **dadurch gekennzeichnet, dass** die wenigstens eine externe Struktur eine Flüssigkeit und/oder Wasser und/oder Grundwasser ist.

28. Vorrichtung (10) zur Behandlung von Feststoffen (12) mit wenigstens zwei elektrischen Spannungsquellen (14), wenigstens einer Elektrode (16) und wenigstens einer Koppeleinrichtung (18), **dadurch gekennzeichnet, dass** mittels der wenigstens zwei elektrischen Spannungsquellen wenigstens zwei Spannungen mit voneinander abweichenden Grundfrequenzen erzeugbar sind und die wenigstens zwei Spannungen mittels der wenigstens einen Koppeleinrichtung (18) auf die wenigstens eine Elektrode (16) übertragbar sind, wobei mindestens ein elektromagnetisches Hochfrequenzfeld, insbesondere im Radiowellen- und/oder Mikrowellenbereich und mindestens ein elektrisches Feld mit einer Frequenz zwischen >0 und 60 Hz in dem zu behandelnden Feststoff (12) einbringbar sind.

29. Vorrichtung (10) nach Anspruch 28, **dadurch gekennzeichnet, dass** die wenigstens eine Koppeleinrichtung (18) wenigstens ein Mittel zur Entkopplung (20) der wenigstens zwei Spannungsquellen (14) umfasst.

30. Vorrichtung (10) nach einem der Ansprüche 28 bis 29, **dadurch gekennzeichnet, dass** wenigstens eine der wenigstens zwei Spannungsquellen (14) ein Hochfrequenzgenerator (22), Wechselstromtransformator (26) oder eine Gleichspannungsquelle ist.

31. Vorrichtung (10) nach einem der Ansprüche 28 bis 30, **dadurch gekennzeichnet, dass** das wenigstens eine Mittel zur Entkopplung (20) ein elektronisches Anpassnetzwerk (24) ist.

32. Vorrichtung (10) nach einem der Ansprüche 28 bis 30, **dadurch gekennzeichnet, dass** das wenigstens eine Mittel zur Entkopplung (20) ein elektronisches Filter ist.

33. Vorrichtung (10) nach Anspruch 32, **dadurch gekennzeichnet, dass** das Filter ein Tiefpass ist.

34. Vorrichtung (10) nach einem der Ansprüche 29 bis 33, **dadurch gekennzeichnet, dass** das wenigstens eine Mittel zur Entkopplung (20) ein λ/4-Kabel ist.

35. Vorrichtung (10) nach einem der Ansprüche 28 bis 34, **dadurch gekennzeichnet, dass** die Vorrichtung (10) wenigstens eine Temperaturmesseinrichtung (30) umfasst.

36. Vorrichtung (10) nach Anspruch 35, **dadurch gekennzeichnet, dass** die wenigstens eine Temperaturmesseinrichtung (30) wenigstens einen optischen Sensor, faseroptischen Sensor oder dergleichen umfasst.

37. Vorrichtung (10) nach einem der Ansprüche 28 bis 36, **dadurch gekennzeichnet, dass** die Vorrichtung (10) wenigstens eine Schadstoffaufbereitungseinrichtung (38) umfasst.

38. Vorrichtung (10) nach einem der Ansprüche 28 bis 37, **dadurch gekennzeichnet, dass** wenigstens eine externe Struktur (46) als Elektrode (16) nutzbar ist.

39. Vorrichtung (10) nach Anspruch 38, **dadurch gekennzeichnet, dass** die wenigstens eine externe Struktur eine Flüssigkeit und/oder Wasser und/oder Grundwasser ist.

## Claims

1. A method for purposefully influencing physical and/or chemical and/or biological parameters that are relevant to a treatment of solids, **characterized in that** at least one electromagnetic high-frequency field, in particular in the radio-wave and/or microwave range, and at least one electric field having a frequency of between >0 and 60 Hz, are simultaneously introduced into a solid matter to be treated.

2. A method according to claim 1, **characterized in that** the solid matter to be treated is a formation of soil.

3. A method according to claim 1, **characterized in that** the solid matter to be treated is a catalyst or a catalytically active material.

4. A method according to claim 1, **characterized in that** the solid matter to be treated is an adsorbent or a sorption-active material.

5. A method according to any one of claims 1 to 4, **characterized in that** the method includes a purposeful heating of the solid matter to be treated.

6. A method according to any one of claims 1 to 5, **characterized in that** the solid matter to be treated is contaminated with at least one pollutant and the solid matter to be treated is treated with the aim of an optimized decontamination.

7. A method according to any one of claims 1 to 6, **characterized in that** at least one substance that is adsorbed at the solid matter to be treated is released from the solid matter to be treated by the heating.

8. A method according to any one of claims 1 to 7, **characterized in that** at least two of the applied fields of different frequencies are introduced into the solid matter to be treated via the same electrode system.

9. A method according to any one of claims 5 to 8, **characterized in that** the technical parameters are selected such that a substantially homogeneous heating of at least a part of the volume of the solid matter to be treated is achieved.

10. A method according to any one of claims 5 to 9, **characterized in that** at least one saturated and at least one unsaturated soil zone are heated at substantially the same heating rates.

11. A method according to any one of claims 5 to 10, **characterized in that** at least two partial volumes of the solid matter to be treated that are of differing nature are heated at substantially the same heating rates.

12. A method according to any one of claims 5 to 11, **characterized in that** the solid matter to be treated is heated in order to extract hydrocarbons contained therein.

13. A method according to any one of claims 1 to 12, **characterized in that** in the solid matter to be treated, microorganisms are killed and/or a hygienisation takes place.

14. A method according to any one of claims 5 to 13, **characterized in that** the heating initiates chemical reactions in the solid matter to be treated that lead to the elimination and/or the transformation of at least a part of at least one pollutant contained in the solid matter to be treated.

15. A method according to any one of claims 5 to 14, **characterized in that** at least one electrokinetic decontamination method is at least partially thermally supported.

16. A method according to any one of claims 5 to 15, **characterized in that** at least one microbial decontamination method is at least partially thermally supported.

17. A method according to any one of claims 5 to 16, **characterized in that** at least one removal of soil air by suction is at least partially thermally supported.

18. A method according to any one of claims 5 to 17, **characterized in that** the at least one pollutant is immobilized by thermally initiated reactions with the soil matrix.

19. A method according to any one of claims 5 to 18, **characterized in that** at least one partial volume of the solid matter is selectively heated, said partial volume acting as a barrier for the at least one pollutant.

20. A method according to any one of claims 1 to 19, **characterized in that** the basic frequency of the first field is substantially 0 Hz and the basic frequency of the at least one further field is substantially a high frequency.

21. A method according to any one of claims 1 to 19, **characterized in that** the basic frequency of the first field is substantially a low frequency and the basic frequency of the at least one further field is substantially a high frequency.

22. A method according to claim 21, **characterized in that** the low-frequency basic frequency has a local standard frequency of 50 or 60 Hz.

23. A method according to any one of claims 20 to 22, **characterized in that** the high-frequency basic frequency is substantially in the microwave range.

24. A method according to any one of claims 20 to 22, **characterized in that** the high-frequency basic frequency is substantially in the radio-wave range.

25. A method according to any one of claims 20 to 24, **characterized in that** the potential curve along at least one electrode is optimized by the selection of the frequency of the high-frequency basic frequency.

26. A method according to any one of claims 1 to 25, **characterized in that** at least one external structure is used as an electrode.

27. A method according to claim 26, **characterized in that** the at least one external structure is a liquid and/or water and/or groundwater.

28. A device (10) for the treatment of solids (12) with at least two electrical voltage sources (14), at least one electrode (16) and at least one coupling apparatus (18), **characterized in that** at least two voltages of differing basic frequencies can be generated by means of the at least two electrical voltage sources and the at least two voltages can be transmitted to the at least one electrode (16) by means of the at least one coupling apparatus (18), wherein at least one electromagnetic high-frequency field, in particular in the radio-wave and/or microwave range, and at least one electric field having a frequency of between >0 and 60 Hz can be introduced into the solid matter to be treated (12).

29. A device (10) according to claim 28, **characterized in that** the at least one coupling apparatus (18) comprises at least one means for decoupling (20) the at least two voltage sources (14).

30. A device (10) according to any one of claims 28 to 29, **characterized in that** at least one of the at least two voltage sources (14) is a radiofrequency oscillator (22), an A.C. transformer (26) or a constant voltage source.

31. A device (10) according to any one of claims 28 to 30, **characterized in that** the at least one means for decoupling (20) is an electronic matching network (24).

32. A device (10) according to any one of claims 28 to 30, **characterized in that** the at least one means for decoupling (20) is an electronic filter.

33. A device (10) according to claim 32, **characterized in that** the filter is a low-pass filter.

34. A device (10) according to any one of claims 29 to 33, **characterized in that** the at least one means for decoupling (20) is a λ/4 cable.

35. A device (10) according to any one of claims 28 to 34, **characterized in that** the device (10) comprises at least one temperature-measuring apparatus (30).

36. A device (10) according to claim 35, **characterized in that** the at least one temperature-measuring apparatus (30) comprises at least one optical sensor, fiber-optic sensor or the like.

37. A device (10) according to any one of claims 28 to 36, **characterized in that** the device (10) comprises at least one pollutant-processing apparatus (38).

38. A device (10) according to any one of claims 28 to 37, **characterized in that** at least one external structure (46) can be used as an electrode (16).

39. A device (10) according to claim 38, **characterized in that** the at least one external structure is a liquid and/or water and/or groundwater.

## Revendications

1. Procédé pour l'action ciblée sur des paramètres physiques et/ou chimiques et/ou biologiques relatifs à un traitement de corps solides, **caractérisé en ce que**, dans un corps solide devant être traité, au moins un champ à hautes fréquences électromagnétique, en particulier dans la plage des ondes radio et/ou des micro-ondes, et au moins un champ électrique, avec une fréquence de >0 à 60 Hz sont appliqués simultanément.

2. Procédé selon la revendication 1, **caractérisé en ce que** le corps solide devant être traité est une formation de sol.

3. Procédé selon la revendication 1, **caractérisé en ce que** le corps solide devant être traité est un catalyseur ou bien un matériau ayant une activité catalytique.

4. Procédé selon la revendication 1, **caractérisé en ce que** le corps solide devant être traité est un adsorbant ou bien un matériau ayant une activité de sorption.

5. Procédé selon l'une des revendications 1 à 4, **caractérisé en ce que** le procédé contient un réchauffement ciblé du corps solide devant être traité.

6. Procédé selon l'une des revendications 1 à 5, **caractérisé en ce que** le corps solide devant être traité est pollué par au moins une substance nocive et **en ce que** le corps solide devant être traité est traité en vue d'une décontamination optimisée.

7. Procédé selon l'une des revendications 1 à 6, **caractérisé en ce qu'**au moins une substance adsorbée au niveau du corps solide devant être traité est dégagée du corps solide devant être traité du fait du réchauffement.

8. Procédé selon l'une des revendications 1 à 7, **caractérisé en ce qu'**au moins deux des champs appliqués de fréquence différente sont appliqués dans le corps solide devant être traité par le même système d'électrodes.

9. Procédé selon l'une des revendications 5 à 8, **caractérisé en ce que** les paramètres techniques sont choisis de telle sorte qu'un réchauffement essentiellement homogène d'au moins une partie du volume du corps solide devant être traité est atteint.

10. Procédé selon l'une des revendications 5 à 9, **caractérisé en ce qu'**au moins une zone de sol saturée et au moins une zone de sol non saturée sont réchauffées à des vitesses de réchauffement essentiellement égales.

11. Procédé selon l'une des revendications 5 à 10, **caractérisé en ce qu'**au moins deux volumes partiels du corps solide devant être traité ayant des constitutions différentes l'une de l'autre sont réchauffés à des vitesses de réchauffement essentiellement égales.

12. Procédé selon l'une des revendications 5 à 11, **caractérisé en ce que** le corps solide devant être traité est réchauffé afin d'extraire les hydrocarbures qui y sont contenus.

13. Procédé selon l'une des revendications 1 à 12, **caractérisé en ce que**, dans le corps solide devant être traité, les micro-organismes sont tués et/ou **en ce qu'**une hygiénisation est effectuée.

14. Procédé selon l'une des revendications 5 à 13, **caractérisé en ce que**, par le réchauffement, des réactions chimiques sont amorcées dans le corps solide devant être traité, lesquelles entraînent l'extraction et/ou la transformation d'au moins une partie d'au moins une substance nocive contenue dans le corps solide devant être traité.

15. Procédé selon l'une des revendications 5 à 14, **caractérisé en ce qu'**au moins un procédé de décontamination électrocinétique est supporté au moins partiellement de façon thermique.

16. Procédé selon l'une des revendications 5 à 15, **caractérisé en ce qu'**au moins un procédé de décontamination microbienne est supporté au moins partiellement de façon thermique.

17. Procédé selon l'une des revendications 5 à 16, **caractérisé en ce qu'**au moins une évacuation de l'air au sol est supportée au moins partiellement de façon thermique.

18. Procédé selon l'une des revendications 5 à 17, **caractérisé en ce que** l'au moins une substance nocive est immobilisée par des réactions amorcées thermiquement avec la matrice du sol.

19. Procédé selon l'une des revendications 5 à 18, **caractérisé en ce qu'**au moins un volume partiel du corps solide, lequel volume agit comme barrière pour l'au moins une substance nocive, est réchauffé de façon sélective.

20. Procédé selon l'une des revendications 1 à 19, **caractérisé en ce que** la fréquence fondamentale du premier champ est pour l'essentiel de 0 Hz et **en ce que** la fréquence fondamentale de l'au moins un autre champ est pour l'essentiel une haute fréquence.

21. Procédé selon l'une des revendications 1 à 19, **caractérisé en ce que** la fréquence fondamentale du premier champ est pour l'essentiel une basse fréquence et **en ce que** la fréquence fondamentale de l'au moins un autre champ est pour l'essentiel une haute fréquence.

22. Procédé selon la revendication 21, **caractérisé en ce que** la fréquence fondamentale de basse fréquence présente une fréquence de réseau selon l'usage local de 50 à 60 Hz.

23. Procédé selon l'une des revendications 20 à 22, **caractérisé en ce que** la fréquence fondamentale de haute fréquence se trouve pour l'essentiel dans la plage des micro-ondes.

24. Procédé selon l'une des revendications 20 à 22, **caractérisé en ce que** la fréquence fondamentale de haute fréquence se trouve pour l'essentiel dans la plage des ondes radio.

25. Procédé selon l'une des revendications 20 à 24, **caractérisé en ce que**, par le choix de la fréquence de la fréquence fondamentale de haute fréquence, la courbe de potentiel le long d'au moins une électrode est optimisée.

26. Procédé selon l'une des revendications 1 à 25, **caractérisé en ce qu'**au moins une structure externe est utilisée comme électrode.

27. Procédé selon la revendication 26, **caractérisé en ce que** l'au moins une structure externe est un liquide et/ou de l'eau et/ou des eaux souterraines.

28. Dispositif (10) pour le traitement de corps solides (12) avec aux moins deux sources de tension électriques (14), au moins une électrode (16) et au moins un dispositif de couplage (18), **caractérisé en ce que**, au moyen des au moins deux sources de tension électriques, au moins deux tensions avec des fréquences fondamentales différentes l'une de l'autre peuvent être générées et les au moins deux tensions peuvent être appliquées à l'au moins une électrode (16) au moyen de l'au moins un dispositif de couplage (18), au moins un champ à haute fréquence électromagnétique, en particulier dans la plage des ondes radio et/ou des micro-ondes et au moins un champ électrique avec une fréquence entre >0 et 60 Hz pouvant être appliqués dans le corps solide devant être traité (12).

29. Dispositif (10) selon la revendication 28, **caractérisé en ce que** l'au moins un dispositif de couplage (18) comprend au moins un moyen pour le découplage (20) des au moins deux sources de tension (14).

30. Dispositif (10) selon l'une des revendications 28 à 29, **caractérisé en ce qu'**au moins une des au moins deux sources de tension (14) est un générateur à haute fréquence (22), un transformateur de courant alternatif (26) ou une source de tension continue.

31. Dispositif (10) selon l'une des revendications 28 à 30, **caractérisé en ce que** l'au moins un moyen de découplage (20) est un réseau d'adaptation électronique (24).

32. Dispositif (10) selon l'une des revendications 28 à 30, **caractérisé en ce que** l'au moins un moyen de découplage (20) est un filtre électronique.

33. Dispositif (10) selon la revendication 32, **caractérisé en ce que** le filtre est un filtre passe-bas.

34. Dispositif (10) selon l'une des revendications 29 à 33, **caractérisé en ce que** l'au moins un moyen de découplage (20) est un câble λ/4.

35. Dispositif (10) selon l'une des revendications 28 à 34, **caractérisé en ce que** le dispositif (10) comprend au moins un dispositif de mesure de la température (30).

36. Dispositif (10) selon la revendication 35, **caractérisé en ce que** l'au moins un dispositif de mesure de la température (30) comprend au moins un capteur optique, un capteur à fibres optiques ou équivalent.

37. Dispositif (10) selon l'une des revendications 28 à 36, **caractérisé en ce que** le dispositif (10) comprend au moins un dispositif de traitement de la substance nocive (38).

38. Dispositif (10) selon l'une des revendications 28 à 37, **caractérisé en ce qu'**au moins une structure externe (46) est utilisable comme électrode (16).

39. Dispositif (10) selon la revendication 38, **caractérisé en ce que** l'au moins une structure externe est un liquide et/ou de l'eau et/ou des eaux souterraines.
